# EUROPEAN PATENT SPECIFICATION

(11) **EP 3 225 447 B1**
(45) Date of publication and mention of the grant of the patent: **26.09.2018**
(21) Application number: 17163276.3
(22) Date of filing: 28.03.2017
(51) Int. Cl.: B60K 6/485, B60K 6/40, H02K 7/00, H02K 11/225

(54) **HYBRID POWER UNIT**
HYBRIDANTRIEBSEINHEIT
UNITÉ DE PUISSANCE HYBRIDE

(30) Priority: 31.03.2016 JP 2016069986
(43) Date of publication of application: 04.10.2017
(73) Proprietor: Kabushiki Kaisha Toyota Jidoshokki, Kariya-shi, Aichi-ken 448-8671 (JP)
(72) Inventor: Matsuhisa, Tomohiro, Aichi-ken, 448-8671 (JP)
(74) Representative: Hoffmann Eitle

(56) References cited:
- JP-A- 2000 224 797
- JP-A- 2005 057 832
- JP-A- 2005 080 430
- JP-A- 2008 143 439
- US-A1- 2009 227 416
- US-A1- 2015 239 332

## Description

### BACKGROUND OF THE INVENTION

The present invention relates to a hybrid power unit which includes both an electric motor and an engine as a power source for a vehicle such as a forklift truck and a construction machine, wherein the hybrid power unit includes a rotation sensor and a structure for mounting the rotation sensor to the electric motor.

A hybrid power unit of the above type has been developed for use in a vehicle such as a forklift truck and a construction machine. The hybrid power unit includes an electric motor having a rotation sensor for detecting the rotation of the electric motor. Re-publication of PCT International Publication No. 2005-105507 discloses a rotation sensor that is disposed adjacent to a bearing so that the rotation sensor can detect the rotation of the electric motor accurately.

There has been proposed a hybrid power unit that dispenses with a shaft bearing by supporting the rotary shaft of the electric motor in a cantilever manner by a crank shaft of the engine so that the axial length of the engine and the electric motor as combined can be reduced. As the electric motor of the hybrid power unit has no bearing, the rotation sensor cannot be disposed adjacent to a bearing, so that the detection accuracy of the rotation sensor is reduced.

JP-A-2005-057832 discloses a hybrid power unit according to the preamble of claim 1.

US-A1-2009/227416 discloses a power transmission unit in which an inspection and tuning of an electric motor can be carried out easily. In the power transmission unit, a rotor of the electric motor is arranged between a first shaft of an input side and a second shaft of an output side, and the first shaft, the second shaft, and the rotor are integrally connected at least in a rotational direction.

### SUMMARY OF THE INVENTION

The present invention which has been made in light of the problems mentioned above is directed to providing a hybrid power unit that has no bearing for an electric motor and prevents decrease of the detection accuracy of the rotation sensor by disposing the rotation sensor at a position in the electric motor adjacent to the engine.

In accordance with one aspect of the present invention, there is a hybrid power unit including both an engine and an electric motor. The electric motor includes a rotary shaft that is supported in a cantilever manner by a crank shaft of the engine. The hybrid power unit further includes a rotation sensor and a structure for mounting the rotation sensor to the electric motor. The structure includes an end plate defining a boundary between the engine and the electric motor and serving as an outer cover for the electric motor, and the rotation sensor includes a stator fixed on the end plate and a rotor fixed on the rotary shaft facing the stator.

A mounting plate is provided to hold the stator between the mounting plate and the end plate, and a bolt is screwed in the mounting plate through the end plate and the stator, wherein an adjust hole is formed through the end plate at a position where an angular position of the stator is adjustable around an axis of the rotary shaft from an engine side of the end plate.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
FIG. 1 is a longitudinal sectional view of an electric motor adapted for use in a hybrid power unit and having a structure for mounting a rotation sensor according to a first embodiment of the present invention;
FIG. 2 is a perspective view of the electric motor and an end plate of FIG. 1;
FIG. 3 is an exploded perspective view showing an end plate and a stator of the rotation sensor of the electric motor of FIG. 2;
FIG. 4 is an enlarged front view of the rotation sensor of FIG. 3;
FIG. 5 is a partially-enlarged sectional view of the structure for mounting the rotation sensor of FIG. 1;
FIG. 6 is a longitudinal sectional view of an electric motor adapted for use in a hybrid power unit and having a structure for mounting a rotation sensor according to a second embodiment of the present invention;
FIG. 7 is a schematic view illustrating the concept of the structure for mounting the rotation sensor in a hybrid power unit according to the present invention; and
FIG. 8 is a schematic view illustrating the function of the structure for mounting the rotation sensor in a hybrid power unit according to the present invention.

### DETAILED DESCRIPTION OF THE EMBODIMENTS

### First embodiment

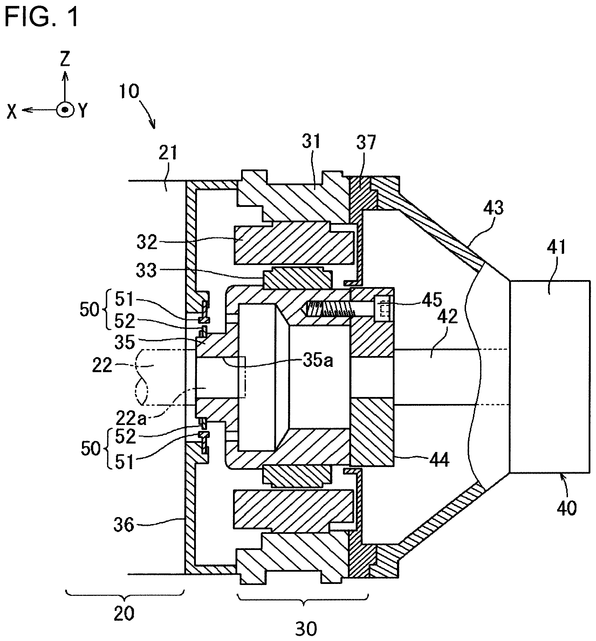

The following will describe a structure for mounting the rotation sensor in a hybrid power unit as a power resource for vehicles such as a forklift truck and a construction machine according to a first embodiment of the present invention with reference to FIGS. 1 to 5. Referring to FIG. 1, the hybrid power unit is designated by reference numeral 10. The hybrid power unit 10 includes an engine indicated by 20 and an electric motor 30. The electric motor 30 also serves as a generator. The coordinate system shown in each drawing indicates various directions of the hybrid power unit 10. In the following descriptions, various directions associated with the hybrid power unit 10 will be discussed based on the arrows in the coordinate system.

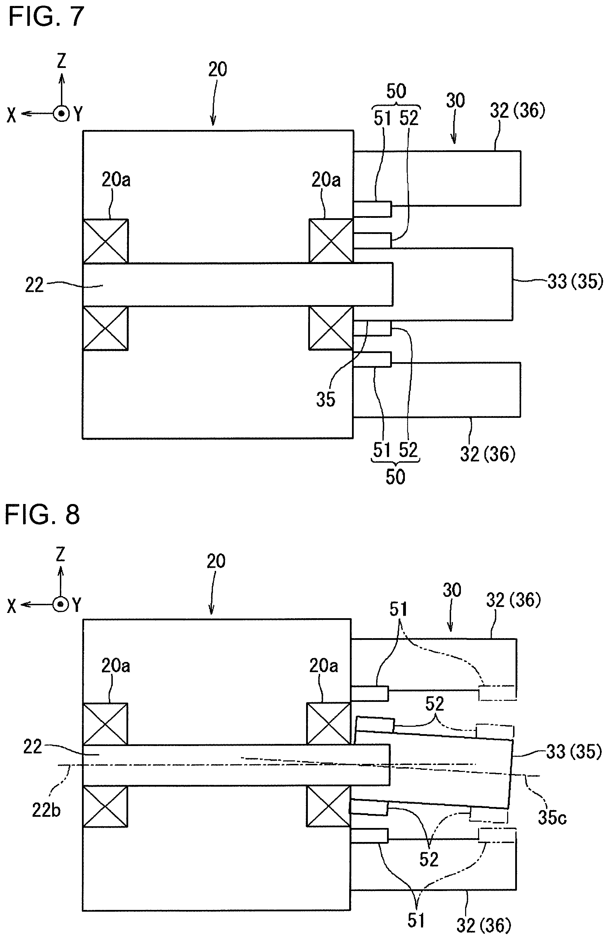

In FIG. 1, the electric motor 30 is shown, but the detailed illustration of the engine 20 is omitted. The engine 20 is disposed on one side of the electric motor 30 in X direction and an oil pump 40 is disposed on the opposite side of the electric motor 30 from the engine 20. The electric motor 30 has a rotary shaft 35 that is fixed on a crank shaft 22 of the engine 20. The rotary shaft 35 of the electric motor 30 is fixed to a pump shaft 42 of the oil pump 40 through a connecting member 44. The crank shaft 22 of the engine 20 is rotatably supported by bearings 20a (FIG. 7) that are provided in a cylinder block 21 of the engine 20. The pump shaft 42 of the oil pump 40 is rotatably supported by a bearing (not shown) that is provided in a pump body 41 of the oil pump 40. The electric motor 30 has no bearing. An axial hole 35a is formed through the end of the rotary shaft 35 of the electric motor 30 on the side thereof adjacent to the engine 20 in X direction to receive therein an end 22a of the crank shaft 22 of the engine 20 that is adjacent to the electric motor 30. The end 22a of the crank shaft 22 is fitted in the axial hole 35a and fixed to the rotary shaft 35 of the electric motor 30. As shown in FIG. 1, the axial hole 35a forms a part of the hole formed axially through the rotary shaft 35. It is noted that the axial hole 35a may be in the form of a bottomed hole to receive therein the end 22a of the crank shaft 22.

The electric motor 30 is a brushless motor and includes a stator 32 fixed on the inner peripheral surface of a housing 31 and a rotor 33 fixed on the rotary shaft 35. The rotor 33 which is fixed on the rotary shaft 35 is disposed radially inward of the stator 32 and driven to rotate by current supplied through the winding (not shown) of stator 32 thus serving as an electric motor. When the rotor 33 is driven to rotate by the crank shaft 22 or the pump shaft 42 and accordingly current is flowed in the winding of the stator 32, the rotor 33 and the stator 32 serve as a generator.

A partition wall 37 is disposed at the end of the electric motor 30 that is adjacent to the oil pump 40 so as to close the interior of the electric motor 30. The partition wall 37 is formed annularly with the outer peripheral surface thereof extending along the outer peripheral surface of the electric motor 30. The center hole of the partition wall 37 is closed by the connecting member 44. The partition wall 37 is fixed to the housing 31 of the electric motor 30. The connecting member 44 is fixed to the end of the rotary shaft 35 of the electric motor 30 that is adjacent to the oil pump 40 in X direction.

The pump body 41 of the oil pump 40 is fixed to the housing 31 of the electric motor 30 at the outer periphery thereof with the partition wall 37 interposed between the housing 31 and a pump support member 43 of the oil pump 40 which is tapered away from the partition wall 37. The connecting member 44 is fixed to the end of the pump shaft 42 on the side thereof that is adjacent to the electric motor 30 in X direction and also to the end of the rotary shaft 35 of the electric motor 30 on the side thereof that is adjacent to oil pump 40. The connecting member 44 is fixed to the rotary shaft 35 by a plurality of bolts 45 (only one bolt shown in FIG. 1) arranged along the annular periphery of the end of the rotary shaft 35 on the side thereof that is adjacent to the oil pump 40 in X direction.

On the side of the electric motor 30 that is adjacent to the engine 20 in X direction, an end plate 36 defines the boundary between the electric motor 30 and the engine 20 and serves as an outer cover of the electric motor 30. Specifically, the end plate 36 is connected to the outer periphery of the housing 31 of the electric motor 30. The end plate 36 has an axial center hole through which the end of the crank shaft 22 passes. Referring to FIG. 1, a rotation sensor 50 is constituted by a stator 51 that is fixed to the inner peripheral surface of the axial center hole of the end plate 36 that is adjacent to the rotary shaft 35 and a rotor 52 that is fixed to the rotary shaft 35 of the electric motor 30 at a position opposite to the stator 51.

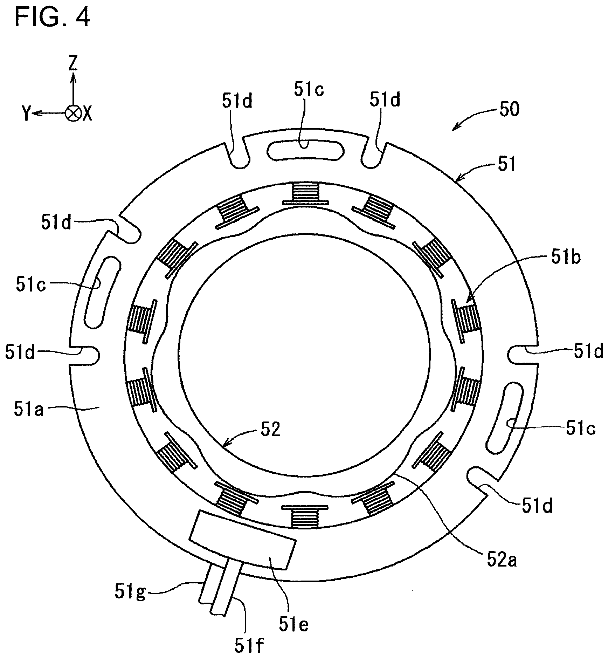

Referring to FIG. 4 showing the rotation sensor 50 in an enlarged view, the stator 51 of the rotation sensor 50 includes an annular core 51a that is formed of a plurality of laminated steel plates and a plurality of winding members 51b disposed on the inner periphery of the core 51a and spaced at a predetermined interval in the circumferential direction of the annular core 51a. The rotor 52 of the rotation sensor 50 is disposed with a small gap formed between the rotor 52 and the winding members 51b. As with the stator 51, the rotor 52 is formed in an annular shape. The rotor 52 has in the outer periphery thereof a plurality of projections 52a formed facing the respective winding members 51b of the stator 51.

Though the detailed illustration of the winding member 51b is omitted in the drawing, two different types of wires are wound in layers. One is an exciting winding to excite the core 51a of the winding members 51b of the stator 51. The other is a detection winding to detect a change of density of magnetic flux of the core 51a. When current is flowed in the exciting winding of the winding members 51b, the core 51a is excited. As the rotor 52 is rotated with the rotary shaft 35 of the electric motor 30 and the projections 52a are moved circumferentially of and relative to the stator 51, the density of magnetic flux of the core 51a in the winding members 51b is changed in response to a change of the position of the projections 52a relative to the winding members 51b. Such change is detected in terms of a voltage across the detection windings of the respective winding members 51b as a detection signal. The detection signal is supplied to the control circuit (not shown) of the electric motor 30 through the terminal (not shown) in a terminal box 51e and an output signal line 51f and used as rotation data of the rotary shaft 35 of the electric motor 30. The exciting current flowing in the exciting winding of the winding members 51b is supplied from the control circuit of the electric motor 30 through the exciting current line 51g.

The stator 51 has therethrough three elongated holes 51c that are formed in the shape of a circular arc coaxial with the stator 51. The three elongated holes 51c are disposed circumferentially spaced away from each other in the stator 51. A pair of engaging portions 51d is formed through the stator 51 at positions adjacent to the opposite ends of each elongated hole 51c in the peripheral direction of the stator 51. The engaging portion 51d is opened at the outer peripheral edge of the stator 51.

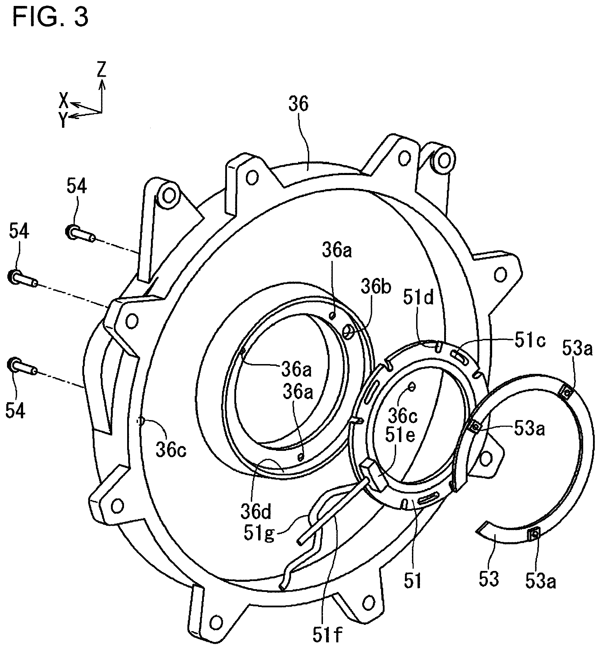

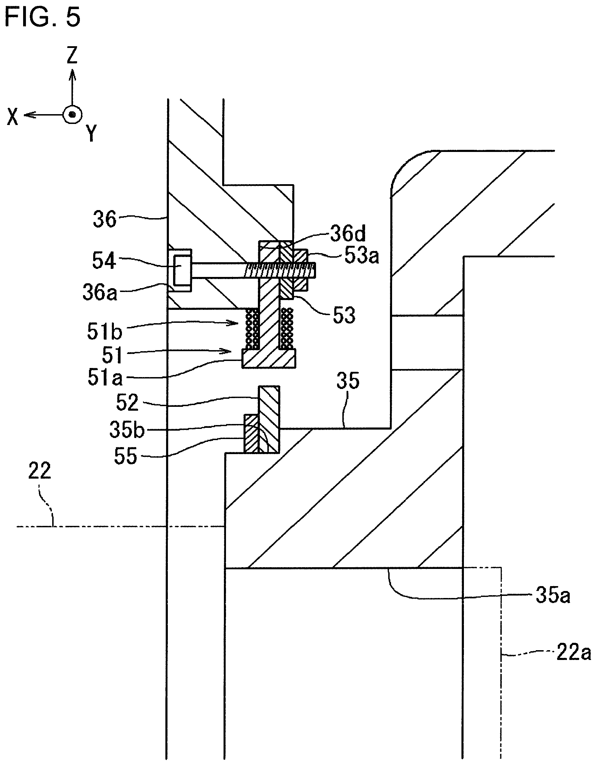

As shown in FIGS. 3 and 5, the stator 51 of the rotation sensor 50 is fitted in a recess 36d formed in the center of the end plate 36 at a position that is adjacent to the electric motor 30 in X direction and fixed to the end plate 36. The recess 36d is formed to fit the shape and size of the outer shape of the stator 51. A mounting plate 53 is set in contact with the side surface of the stator 51 that is adjacent to the electric motor 30 in X direction. The mounting plate 53 is formed to have a shape and size that correspond to the shape and a size of a part of the core 51a of the stator 51 except the winding members 51b. The mounting plate 53 is formed by removing part of the annular shape of the mounting plate 53 so as to prevent interference of the mounting plate 53 with the terminal box 51e on the core 51a. Three holes (not shown) are formed through the mounting plate 53 at positions corresponding to the respective elongated holes 51c of the stator 51 and nuts 53a are welded to the mounting plate 53 at positions of the respective holes.

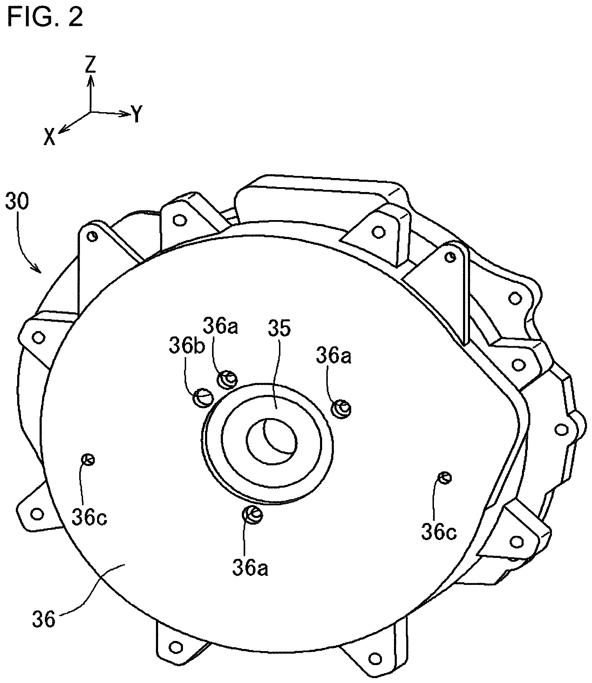

As shown in FIGS. 2 and 3, the end plate 36 has therethrough three bolt holes 36a at positions corresponding to the three elongated holes 51c of the stator 51. A bolt 54 is inserted through each bolt hole 36a and each elongated hole 51c of the stator 51 and screwed in the threaded hole in each nut 53a of the mounting plate 53.

Specifically, with the stator 51 and the mounting plate 53 fitted in the recess 36d of the end plate 36, the bolts 54 are inserted into the respective bolt holes 36a from the side of the end plate 36 that is adjacent to the engine 20. Then, the bolts 54 are inserted through the elongated holes 51c and screwed through the threaded holes of the nuts 53a of the mounting plate 53, respectively. Thus, the stator 51 is fixed to the end plate 36. The stator 51 which is fitted in the recess 36d may be fixed to the end plate 36 at the center thereof without being offset in the radial direction relative to the end plate 36. However, the elongated hole 51c formed through the stator 51 makes possible adjustment of the angular position of the stator 51 relative to the end plate 36 with the bolts 54 loosened.

An adjust hole 36b is formed through the end plate 36 at a position adjacent to one of the bolt holes 36a. In adjusting the angular position of the stator 51, a needle-shaped tool is inserted through the adjust hole 36b until the tip end of the tool is engaged with the engaging portion 51d of the stator 51 and the stator 51 is rotated by using the tool. For the adjustment of the stator 51, the bolt 54s need be loosened from the side of the end plate 36 that is adjacent to the engine 20 in X direction. That is, loosening the bolt 54 and rotating the stator 51 with the tool inserted through the adjust hole 36b may be performed from the same side of the end plate 36 in X direction. It is noted that the illustration of the structure for fixing the stator 51 by the bolts 54 is omitted in FIG. 1.

A pair of pin holes 36c is formed through the end plate 36 at positions outward of the bolt holes 36a in Y direction. Though not shown in the drawing, the cylinder block 21 of the engine 20 is provided on the side thereof adjacent to the electric motor 30 with a pair of locating pins at positions corresponding to the pin holes 36c of the end plate 36. By inserting the paired locating pins in the paired pin holes 36c of the end plate 36, the end plate 36 is positioned correctly relative to the cylinder block 21.

As shown in FIG. 5, a stepped portion 35b that is formed in such a way that the diameter of the rotary shaft 35 is reduced, is formed at the end of the rotary shaft 35 adjacent to the end plate 36 in X direction. The rotor 52 of the rotation sensor 50 is fitted on the rotary shaft 35 with the inner periphery of the rotor 52 in contact with the stepped portion 35b. A pressing ring 55 is shrink-fitted on the stepped portion 35b of the rotary shaft 35. As with the rotor 52, the pressing ring 55 has an annular plate shape. After shrink-fitted, the inner diameter of the pressing ring 55 becomes substantially the same as that of the rotor 52. The pressing ring 55 is smaller in the outer diameter than the rotor 52. The rotor 52 thus fixed on the rotary shaft 35 is positioned facing the inner periphery of the stator 51.

Referring to FIG. 7 showing schematically the mounting of the rotation sensor 50 according to the first embodiment of the present invention, the crank shaft 22 of the engine 20 is supported at the opposite ends thereof by the paired bearings 20a, whereas the electric motor 30 has no bearing. The rotary shaft 35 of the rotor 33 which is connected to the crank shaft 22 is supported in a cantilever manner. The stator 51 of the rotation sensor 50 is fixed to the end plate 36 that is integrated with the stator 32 of the electric motor 30. The rotor 52 of the rotation sensor 50 is fixed on the rotary shaft 35 of the electric motor 30 on the side of the electric motor 30 that is adjacent to the engine 20 in X direction.

FIG. 8 shows function of the electric motor 30 according to the first embodiment of the present invention. As described above, in the case that the electric motor 30 has no bearing, misalignment of the rotor 33 and the rotary shaft 35 of the electric motor 30 relative to the crank shaft 22 of the engine 20 may occur due to production tolerance. Specifically, as shown in FIG. 8, the axis 35c of the rotary shaft 35 fails to be aligned with the axis 22b of the crank shaft 22. Then, the spaced distance between the stator 51 and the rotor 52 of the rotation sensor 50 becomes irregular, with the result that detection accuracy of the rotation sensor 50 is reduced. In the case of such poor alignment of the rotary shaft 35 of the electric motor 30, the variation of the spaced distance between the stator 51 and the rotor 52 of the rotation sensor 50 is greater when the rotation sensor 50 is disposed on the distal end of the rotary shaft 35 as indicated by phantom lines than when the rotation sensor 50 is disposed on the proximal end of the rotary shaft 35 as indicated by solid lines. It is noted that the misalignment is shown exaggeratedly in FIG. 8 for better understanding of the present invention.

As is apparent from the foregoing description, the rotation sensor 50 of the present embodiment is less susceptible to the influence of misalignment of the rotary shaft 35 with respect to the crank shaft 22. As a result, decrease of the detection accuracy of the rotation sensor 50 due to misalignment of the rotary shaft 35 of the electric motor 30 may be prevented.

The stator 51 of the rotation sensor 50 is fitted and fixed in the recess 36d of the end plate 36. Though the stator 51 is movable only in the peripheral direction for the angular position adjustment thereof, the stator 51 is securely fixed at a position that is determined by the recess 36d without being allowed to move in any other directions. The end of the crank shaft 22 that is adjacent to the electric motor 30 in X direction is fitted to the axial hole 35a of the rotary shaft 35 of the electric motor 30. That is, the rotor 52 of the rotation sensor 50 is fixed on the rotary shaft 35 of the electric motor 30 and hence fixed on the crank shaft 22. Therefore, decrease of the detection accuracy of the rotation sensor 50 by the misalignment of the rotary shaft 35 of the electric motor 30 may be prevented.

### Second embodiment

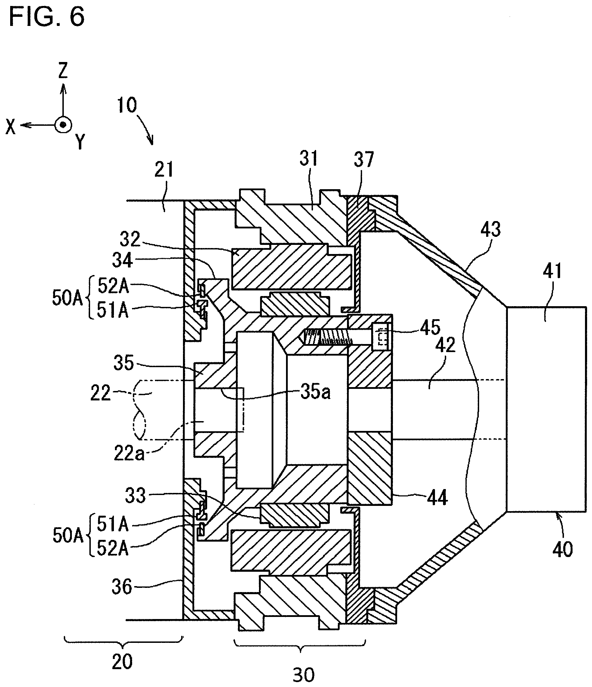

Referring to FIG. 6, there is shown a structure for mounting a rotation sensor in a hybrid power unit according to a second embodiment of the present invention. The second embodiment differs from the first embodiment in that a rotor 52A of the rotation sensor 50A is disposed radially outward of the stator 51A of the rotation sensor 50A. The same reference numerals will be used to denote those components or elements which correspond to the counterparts of the first embodiment and the description thereof will not be reiterated.

In the second embodiment of the present invention, the stator 51A of the rotation sensor 50A has on the outer peripheral side thereof a winding member and is fixed to the end plate 36 on the inner peripheral side thereof. The rotor 52A is fixed to the end of a flange portion 34 extending radially outward from the rotary shaft 35. Specifically, the rotor 52A is fixed to the top of the flange portion 34 on the radially inner side thereof so as to face the stator 51A. The manner in which the stator 51A is fixed to the end plate 36 and the rotor 52A is fixed to the end plate 36 is substantially the same as the manner in which the stator 51 is fixed to the end plate 36 and the rotor 52 is fixed to the rotary shaft 35 in the first embodiment of the present invention.

As with the first embodiment, the stator 51A of the rotation sensor 50A of the second embodiment is fixed to the end plate 36 and the rotor 52A of the rotation sensor 50A is fixed to the flange portion 34 so as to face the stator 51A on the side of the electric motor 30 that is adjacent to the engine 20. Therefore, the rotation sensor 50A is less susceptible to the influence of misalignment of the rotary shaft 35 with respect to the crank shaft 22, as compared with a structure in which the rotation sensor 50A is fixed at a position that is remote from the crank shaft 22 supported by the bearing 20a. As a result, decrease of the detection accuracy of the rotation sensor 50A due to misalignment of the rotary shaft 35 of the electric motor 30 may be prevented.

While the present invention has been described in terms of specific embodiments, the invention can be practiced with modification within the scope of the claims. For example, though in the above-described embodiments, the crank shaft of the engine and the rotary shaft of the electric motor are connected to the oil pump to convert the output power of the hybrid power unit to hydraulic pressure, the output of the hybrid power unit may be used directly as a power source. Though in the above-described embodiments, the hybrid power unit is used as a power source for a vehicle such as a forklift truck and a construction machine, the hybrid power unit may be used as a power source for a passenger car.

In the present invention, the rotation sensor may be a type detecting change of magnetic field caused by the rotation of the rotor or may be a photo coupler. In this case, the electric motor also serves as a generator.

In the present invention, the mounting plate may be integrally formed to be an annular shape in accordance with the annular stator or may be formed to be a shape corresponding to a part of the annular stator. In the latter case, the plural mounting plates may be provided along the annular stator. To fix the mounting plate and the end plate with the bolt, the external thread as a bolt may be fastened with the internal thread, the bolt may be fastened with the nut welded to the end plate or the nut may be fastened with the bolt welded in the end plate. The number of the bolt may be plural. The adjust hole may be single, but the plural adjust holes may be formed along the annular stator.

In the present invention, the stator of the rotation sensor is fixed to the end plate by fixing the mounting plate to the end plate by the bolts. Therefore, the bolts can be fastened from the side of the end plate adjacent to the engine. The angular position of the stator of the rotation sensor can be adjusted from the side of the end plate adjacent to the engine by rotating the stator of the rotation sensor through the adjust hole. After the bolts are loosened from the side of the end plate adjacent to the engine, the angular positon of the stator of the rotation sensor can be adjusted. After finishing adjustment, the stator can be fixed to the end plate by fastening the bolts. Thus, the angular position of the stator of the rotation sensor can be adjusted easily from the side of the end plate adjacent to the engine.

## Claims

1. A hybrid power unit (10) including both an engine (20) and an electric motor (30), wherein the electric motor (30) includes a rotary shaft (35) that is supported in a cantilever manner by a crank shaft (22) of the engine (20),
the hybrid power unit (10) further including a rotation sensor (50, 50A) and a structure for mounting the rotation sensor (50, 50A) to the electric motor (30),
the structure including an end plate (36) defining a boundary between the engine (20) and the electric motor (30) and serving as an outer cover for the electric motor (30), and
the rotation sensor (50, 50A) comprising:
a stator (51, 51A) fixed on the end plate (36) ; and
a rotor (52, 52A) fixed on the rotary shaft (35)
facing the stator (51, 51A),
**characterized in that**
a mounting plate (53) is provided to hold the stator (51, 51A) between the mounting plate (53) and the end plate (36), and that a bolt (54) is screwed in the mounting plate (53) through the end plate (36) and the stator (51, 51A), wherein an adjust hole (36b) is formed through the end plate (36) at a position where an angular position of the stator (51, 51A) is adjustable around an axis (35c) of the rotary shaft (35) from an engine side of the end plate (36).

2. The hybrid power unit (10) according to claim 1, wherein a recess (36d) is formed in a side of the end plate (36) adjacent to the electric motor (30) to fit a shape and size of the stator (51) of the rotation sensor (50), wherein the stator (51) of the rotation sensor (50) is fixedly fitted in the recess (36d), wherein an axial hole (35a) is formed in an end of the rotary shaft (35) of the electric motor (30) to receive an end of the crank shaft (22) of the engine (20), wherein the end of the crank shaft (22) is fixedly fitted in the axial hole (35a), and wherein the rotor (52) of the rotation sensor (50) is fixed on an outer periphery of the rotary shaft (35) of the electric motor (30) and positioned facing an inner periphery of the stator (51) of the rotation sensor (50).

## Patentansprüche

1. Hybridleistungseinheit (10), einschließend sowohl einen Motor (20), als auch einen Elektromotor (30), wobei der Elektromotor (30) eine Drehwelle (35) einschließt, die in freitragender Weise mittels einer Kurbelwelle (22) des Motors (20) gestützt wird,
wobei die Hybridleistungseinheit (10) weiter einen Rotationssensor (50, 50A) und eine Struktur zum Montieren des Rotationssensors (50, 50A) am Elektromotor (30) einschließt,
wobei die Struktur eine Endplatte (36) einschließt, die eine Grenze zwischen dem Motor (20) und dem Elektromotor (30) definiert und als eine äußere Abdeckung für den Elektromotor (30) dient, und
wobei der Rotationssensor (50, 50A) umfasst:
einen Stator (51, 51A), fixiert an der Endplatte (36); und
einen Rotor (52, 52A), fixiert an der Drehwelle (35) dem Stator (51, 51A) zugewandt,
**dadurch gekennzeichnet, dass**
eine Montageplatte (53) bereitgestellt ist, um den Stator (51, 51A) zwischen der Montageplatte (53) und der Endplatte (36) zu halten, und dass ein Bolzen (54) in die Montageplatte (53) durch die Endplatte (36) und den Stator (51, 51A) geschraubt ist, wobei ein Einstellloch (36b) durch die Endplatte (36) an einer Position ausgebildet ist, wo eine Winkelposition des Stators (51, 51A) um eine Achse (35c) der Drehwelle (35) von einer Motorseite der Endplatte (36) einstellbar ist.

2. Hybridleistungseinheit (10) nach Anspruch 1, wobei eine Aussparung (36d) in einer Seite der Endplatte (36) angrenzend an den Elektromotor (30) ausgebildet ist, um zu einer Form und Größe des Stators (51) des Rotationssensors (50) zu passen, wobei der Stator (51) des Rotationssensors (50) fixiert in die Aussparung (36d) gepasst ist, wobei ein Axialloch (35a) in einem Ende der Drehwelle (35) des Elektromotors (30) ausgebildet ist, um ein Ende der Kurbelwelle (22) des Motors (20) aufzunehmen, wobei das Ende der Kurbelwelle (22) fixiert in das Axialloch (35a) gepasst ist, und wobei der Rotor (52) des Rotationssensors (50) an einer äußeren Peripherie der Drehwelle (35) des Elektromotors (30) fixiert ist und einer inneren Peripherie des Stators (51) des Rotationssensors (50) zugewandt positioniert ist.

## Revendications

1. Unité d'énergie hybride (10) comprenant à la fois une machine motrice (20) et un moteur électrique (30), dans laquelle le moteur électrique (30) comprend un arbre rotatif (35) supporté en porte-à-faux par un vilebrequin (22) de la machine motrice (20),
l'unité d'énergie hybride (10) incluant en outre un capteur de rotation (50, 50A) et une structure pour monter le capteur de rotation (50, 50A) sur le moteur électrique (30),
la structure incluant une plaque d'extrémité (36) définissant une limite entre la machine motrice (20) et le moteur électrique (30) et servant de capot extérieur pour le moteur électrique (30), et
le capteur de rotation (50, 50A) comprenant :
un stator (51, 51A) fixé sur la plaque d'extrémité (36) ; et
un rotor (52, 52A) fixé sur l'arbre rotatif (35) faisant face au stator (51, 51A),
**caractérisée en ce que**
une plaque de montage (53) est ménagée pour maintenir le stator (51, 51A) entre la plaque de montage (53) et la plaque d'extrémité (36), et **en ce qu'**un boulon (54) est vissé dans la plaque de montage (53) à travers la plaque d'extrémité (36) et le stator (51, 51A), un trou de réglage (36b) étant formé à travers la plaque d'extrémité (36) dans une position dans laquelle une position angulaire du stator (51, 51A) est réglable autour d'un axe (35c) de l'arbre rotatif (35) depuis un côté machine motrice de la plaque d'extrémité (36).

2. Unité d'énergie hybride (10) selon la revendication 1, dans laquelle un évidement (36d) est formé dans un côté de la plaque d'extrémité (36) adjacent au moteur électrique (30) pour s'ajuster à une forme et une taille du stator (51) du capteur de rotation (50), dans laquelle le stator (51) du capteur de rotation (50) est ajusté de façon fixe dans l'évidement (36d), dans laquelle un trou axial (35a) est formé dans une extrémité de l'arbre rotatif (35) du moteur électrique (30) pour recevoir une extrémité du vilebrequin (22) de la machine motrice (20), dans laquelle l'extrémité du vilebrequin (22) est ajustée de façon fixe dans le trou axial (35a), et dans laquelle le rotor (52) du capteur de rotation (50) est fixé sur une périphérie extérieure de l'arbre rotatif (35) du moteur électrique (30) et positionné en regard d'une périphérie intérieure du stator (51) du capteur de rotation (50).
